# EUROPÄISCHE PATENTSCHRIFT

(11) **EP 2 386 897 B1**
(45) Veröffentlichungstag und Bekanntmachung des Hinweises auf die Patenterteilung: **05.04.2017**
(21) Anmeldenummer: 11163006.7
(22) Anmeldetag: 19.04.2011
(51) Int. Cl.: G02B 27/09, G01C 15/00

(54) **Optisches System zur Strahlformung eines Laserstrahls sowie Lasersystem mit einem solchen optischen System**
Optical system for forming a laser beam and laser system with such an optical system
Système optique pour la formation d'un rayonnement laser ainsi que système laser doté d'un tel système optique

(30) Priorität: 10.05.2010 DE 102010028794
(43) Veröffentlichungstag der Anmeldung: 16.11.2011
(73) Patentinhaber: HILTI Aktiengesellschaft, 9494 Schaan (LI)
(72) Erfinder: Dang, Lieu-Kim, 9473, Gams (CH)
(74) Vertreter: Hilti Aktiengesellschaft Corporate Intellectual Property

(56) Entgegenhaltungen:
- WO-A1-2004/044641
- US-A- 5 644 400
- US-A1- 2004 107 588
- US-A1- 2005 091 859
- US-B2- 6 646 813

## Beschreibung

Die vorliegende Erfindung betrifft ein optisches System zur Strahlformung eines Laserstrahls gemäß dem Oberbegriff des Anspruchs 1 sowie ein Lasersystem mit einem solchen optischen System.

US 7,497,018 B2 offenbart ein Lasersystem, bei dem ein punktförmiger Laserstrahl mittels eines optischen Systems in einen linienförmigen Laserstrahl umgeformt wird. Das Lasersystem umfasst ein Gehäuse und eine in dem Gehäuse angeordnete Strahleinrichtung bestehend aus einer Strahlquelle zur Erzeugung eines Laserstrahls und dem optischen System. Das optische System umfasst ein erstes optisches Element und ein als Kollimationslinse ausgebildetes zweites optisches Element, die in einem Optikträger angeordnet sind.

Die Strahlquelle erzeugt einen divergenten primären Laserstrahl. Der primäre Laserstrahl trifft auf die Kollimationslinse, die den primären Laserstrahl kollimiert und einen parallelen sekundären Laserstrahl erzeugt. Der sekundäre Laserstrahl trifft auf das erste optische Element, das in Ausbreitungsrichtung hinter der Kollimationslinse angeordnet und als Kegelspiegel ausgebildet ist. Bei einem Kegelspiegel handelt es sich um ein reflektierendes optisches Element, das zumindest abschnittsweise in Form eines Kegels mit einer Grundfläche und einer an die Grundfläche angrenzenden Mantelfläche ausgebildet ist. Die Mantelfläche des Kegelspiegels ist als Reflektionsfläche ausgebildet, an der der sekundäre Laserstrahl um 90° umgelenkt und in einen linienförmigen Laserstrahl umgeformt wird.

Ein Problem des bekannten optischen Systems mit mehreren optischen Elementen besteht darin, dass die optischen Elemente zueinander justiert und im justierten Zustand fixiert werden müssen. Bei unterschiedlichen Materialien, wie bspw. Glas und Metall, führen Temperaturschwankungen zu unterschiedlichen Ausdehnungen und damit Justagefehlern, die die Genauigkeit verringern. Lasersysteme kommen häufig unter widrigen Umweltbedingungen zum Einsatz und müssen extremen thermischen Belastungen durch die Umwelt standhalten.

US 2005/091859 A1 offenbart ein optisches System zur Strahlformung eines Laserstrahls mit einem ersten optischen Element, das als zylinderförmiger Grundkörper mit einer Grundfläche und einer an die Grundfläche angrenzenden Mantelfläche ausgebildet ist, wobei im Grundkörper ein kegel- oder kegelstumpfförmiger Ausschnitt mit einer Mantelfläche vorgesehen ist. Die Grundfläche und die Mantelfläche des Grundkörpers sind als Transmissionsflächen und die Mantelfläche des kegel- oder kegelstumpfförmigen Ausschnittes als Reflektionsfläche für den Laserstrahl ausgebildet. Ein Umlenkprisma zum Umlenken des Laserstrahles kann in die Grundfläche des zylinderförmigen Grundkörpers integriert werden oder unmittelbar an die Grundfläche angrenzen.

Die Aufgabe der vorliegenden Erfindung besteht demgegenüber darin, ein optisches System sowie ein Lasersystem mit einem solchen optischen System zu entwickeln, bei dem der Justageaufwand und Justagefehler reduziert sind.

Diese Aufgabe wird bei dem eingangs genannten optischen System erfindungsgemäß durch die Merkmale des unabhängigen Anspruchs gelöst. Vorteilhafte Weiterbildungen sind in den abhängigen Ansprüchen angegeben.

Es wird ein optisches System zur Strahlformung eines Laserstrahls in einem linienförmigen Laserstrahl mit einem ersten optischen Element, das zumindest abschnittsweise als Grundkörper mit einer Grundfläche und einer an die Grundfläche angrenzenden Mantelfläche ausgebildet ist, und mit einem zweiten optischen Element, das in das erste optische Element integriert ist oder unmittelbar an das erste optische Element angrenzt, vorgeschlagen. Die Grundfläche und die Mantelfläche des Grundkörpers sind zumindest abschnittsweise als Transmissionsflächen für den Laserstrahl ausgebildet und der Grundkörper weist einen kegelförmigen oder kegelstumpfförmigen Ausschnitt mit einer Mantelfläche, die zumindest abschnittsweise als Reflektionsfläche für den Laserstrahl ausgebildet ist und den Laserstrahl in den linienförmigen Laserstrahl umformt, auf.

Ein einfallender Laserstrahl wird an einer Grenzfläche zwischen einem ersten und zweiten optischen Medium grundsätzlich in drei Teile aufgeteilt: Ein erster Teil wird an der Grenzfläche reflektiert (reflektierter Laserstrahl), ein zweiter Teil tritt durch die Grenzfläche in das zweite optische Medium ein (transmittierter Laserstrahl) und ein dritter Teil wird an der Grenzfläche absorbiert (absorbierter Laserstrahl). Die Anteile des reflektierten, transmittierten und absorbierten Laserstrahls können beispielsweise über die Wellenlänge und/oder den Einfallswinkel des einfallenden Laserstrahls und/oder eine Beschichtung der Grenzfläche verändert werden. Als Transmissionsfläche wird eine Grenzfläche bezeichnet, an der ein Laserstrahl von einem ersten in ein zweites optisches Medium übertritt, und als Reflektionsfläche eine Grenzfläche, an der ein Laserstrahl innerhalb eines optischen Mediums umgelenkt wird. Die Ausbildung des Grundkörpers mit zwei Transmissionsflächen bietet den Vorteil, dass weitere Funktionen in den Grundkörper integriert oder unmittelbar an den Grundkörper angrenzend ausgebildet werden können.

Erfindungsgemäß ist vorgesehen, dass das zweite optische Element in die Mantelfläche des Ausschnittes und/oder die Mantelfläche des Grundkörpers integriert ist. Der Begriff "integriert" bedeutet, dass zwischen dem ersten und zweiten optischen Element keine Grenzfläche besteht. Als Grenzfläche ist eine Fläche definiert, die zwischen zwei Medien mit unterschiedlichen Brechungsindices angeordnet ist. Diese Ausführung hat den Vorteil, dass nur ein optischer Träger erforderlich ist und die Justage der beiden optischen Elemente bei der Herstellung des optischen Systems erfolgt.

In einer bevorzugten Ausführung weist der Ausschnitt eine an die Mantelfläche angrenzende Deckfläche, die zumindest abschnittsweise als Transmissionsfläche für den Laserstrahl ausgebildet ist, auf. Besonders bevorzugt ist ein optisches Element, das in die Deckfläche integriert ist oder unmittelbar an die Deckfläche des Ausschnittes angrenzt, vorgesehen. Diese Ausführung hat den Vorteil, dass neben dem Linienstrahl ein Punktstrahl erzeugt wird. Über das in die Deckfläche integrierte oder unmittelbar angrenzende optische Element kann die Strahlform des Punktstrahls angepasst werden. Mittels einer Kollimations- oder Fokussieroptik kann ein kollimierter oder fokussierter Punktstrahl erzeugt werden.

Außerdem wird ein Lasersystem mit einer Strahlquelle zur Erzeugung eines Laserstrahls und einem optischen System vorgeschlagen.

Bevorzugt ist eine Verstelleinrichtung vorgesehen, mit der die Position der Strahlquelle zum optischen System und/oder die Position des optischen Systems zur Strahlquelle in einer Ausbreitungsrichtung des Laserstrahls und/oder in einer Ebene senkrecht zur Ausbreitungsrichtung des Laserstrahls verstellbar sind.

In einer bevorzugten Ausführung des Lasersystems sind ein erstes optisches System, das einen ersten linienförmigen Laserstrahl erzeugt, und ein zweites optisches System, das einen zweiten linienförmigen Laserstrahl erzeugt, vorgesehen. Besonders bevorzugt ist ein drittes optisches System, das einen dritten linienförmigen Laserstrahl erzeugt, vorgesehen. Dabei sind die linienförmigen Laserstrahlen senkrecht zueinander oder unter einem definierten Winkel angeordnet.

In einer weiteren bevorzugten Ausführung des Lasersystems ist zumindest ein optisches System so ausgebildet, dass neben einem linienförmigen Laserstrahl ein punktförmiger Laserstrahl erzeugt wird.

Weitere Vorteile und vorteilhafte Ausgestaltungen des Gegenstands der Erfindung sind der Beschreibung, der Zeichnung und den Ansprüchen entnehmbar. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: ein Lasersystem mit einem optischen System, das als Kreiszylinder mit einem kegelförmigen Ausschnitt ausgebildet ist, mit einer Kollimationsoptik, die in die Grundfläche des Kreiszylinders integriert ist;
- Fig. 2: eine Ausführungsform eines erfindungsgemäßen optischen Systems, das als Kegelstumpf mit einem kegelstumpfförmigen Ausschnitt ausgebildet ist, mit einer Kollimationsoptik, die in die Mantelfläche des kegelstumpfförmigen Ausschnitts integriert ist;
- Fig. 3: ein weiteres optisches System, das als Kreiszylinder mit einem kegelförmigen Ausschnitt ausgebildet ist, mit einer Fokussieroptik, die unmittelbar an die Mantelfläche des Kreiszylinders angrenzt; und
- Fig. 4: ein Lasersystem mit einem ersten, zweiten und dritten erfindungsgemäßen optischen System, die drei senkrecht zueinander angeordnete, linienförmige Laserstrahlen und einen punktförmigen Laserstrahl erzeugen.

Gleiche oder funktionsgleiche Elemente werden durch gleiche Bezugszeichen in den Figuren indiziert, soweit nicht anders angegeben.

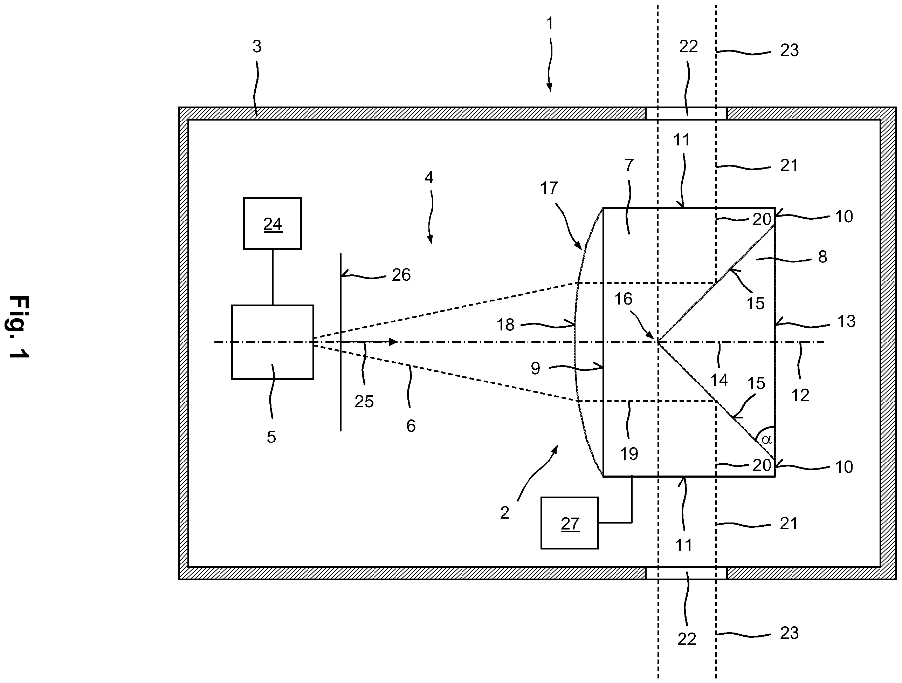

**Fig. 1** zeigt ein Lasersystem **1** mit einem als Strahlformungsoptik ausgebildeten optischen System **2**. Das Lasersystem 1 umfasst ein Gehäuse **3** und eine in dem Gehäuse 3 angeordnete Strahleinrichtung **4** bestehend aus einer Strahlquelle **5** und der erfindungsgemäßen Strahlformungsoptik 2.

Die Strahlquelle 5 ist als Halbleiterlaser ausgebildet, der einen primären Laserstrahl **6** im sichtbaren Spektrum, beispielsweise einen roten Laserstrahl mit einer Wellenlänge von 635 nm oder einen grünen Laserstrahl mit einer Wellenlänge von 532 nm, erzeugt. Nach dem Austritt des primären Laserstrahls 6 aus der Strahlquelle 5 kommt es aufgrund der Divergenz zu einer Aufweitung des Laserstrahls 6, d.h. der Strahldurchmesser des primären Laserstrahls 6 nimmt mit der Entfernung des Laserstrahls 6 von der Strahlquelle 5 zu. Mit Hilfe einer Kollimationsoptik kann ein Laserstrahl kollimiert werden.

Im Strahlengang hinter der Strahlquelle 5 ist die Strahlformungsoptik 2 angeordnet. Die Strahlformungsoptik 2 ist als Grundkörper in Form eines geraden Kreiszylinders **7** mit einem Ausschnitt **8** ausgebildet. Ein Kreiszylinder ist ein Zylinder mit einer kreisförmigen Grundfläche. Ein Zylinder ist von zwei parallelen, ebenen Flächen, die als Grund- und Deckfläche bezeichnet werden, und einer Mantelfläche begrenzt. Ein Zylinder entsteht durch Verschiebung einer in einer Ebene liegenden, begrenzten Fläche entlang einer Geraden, die nicht in der Ebene liegt und die Zylinderachse definiert. Bei einem geraden Zylinder liegt die Zylinderachse senkrecht zur Grundfläche, wohingegen die Zylinderachse bei einem schiefen Zylinder unter einem Winkel ≠ 90° zur Grundfläche angeordnet ist. Der Abstand der beiden Ebenen, in denen die Grund- und Deckflächen liegen, definiert die Höhe des Zylinders.

Die Oberfläche des Kreiszylinders 7 umfasst eine kreisförmige Grundfläche **9**, eine zur Grundfläche 9 parallele kreisförmige Deckfläche **10** und eine die Grund- und Deckflächen 9, 10 verbindende Mantelfläche **11**. Die Grund- und Deckflächen 9, 10 sind senkrecht und die Mantelfläche 11 parallel zu einer Zylinderachse **12** angeordnet. Die Grundfläche 9 und die Mantelfläche 11 des Kreiszylinders 7 bilden jeweils eine Grenzfläche zwischen der Strahlformungsoptik 2 und der Umgebung und werden im Folgenden als Transmissionsflächen für den Laserstrahl bezeichnet.

Der Transmissionsgrad einer Transmissionsfläche hängt unter anderem vom Einfallswinkel eines einfallenden Laserstrahls und den Brechungsindices der Materialien ab. Der Transmissionsgrad kann dadurch erhöht werden, dass die Transmissionsfläche mit einer Beschichtung versehen wird. Je höher der transmittierte Anteil des Laserstrahls ist, umso größer ist die Intensität und umso besser ist die Sichtbarkeit des Laserstrahls auf einem Zielobjekt.

Die Strahlformungsoptik 2 weist den Ausschnitt 8 auf, der als gerader Kreiskegel ausgebildet ist. Ein Kreiskegel ist ein Kegel mit einer kreisförmigen Grundfläche. Ein Kegel ist ein geometrischer Körper, der entsteht, wenn alle Punkte einer in einer Ebene liegenden, begrenzten Fläche geradlinig mit einem Punkt, der außerhalb der Ebene liegt, verbunden werden. Die Fläche wird als Grundfläche, die Begrenzungslinie der Grundfläche als Leitkurve und der Punkt als Kegelspitze bezeichnet. Der Abstand der Kegelspitze von der Grundfläche definiert die Höhe des Kegels. Die Verbindungslinien der Kegelspitze mit der Leitkurve werden als Mantellinien und die Vereinigung der Mantellinien als Mantelfläche des Kegels bezeichnet. Bei einem geraden Kegel mit einer kreisförmigen Grundfläche liegt die Kegelspitze auf der Kegelachse, die senkrecht zur Grundfläche durch den Mittelpunkt der Grundfläche verläuft, wohingegen die Kegelachse bei einem schiefen Kreiskegel außerhalb des Mittelpunktes der Grundfläche verläuft.

Die Oberfläche des kegelförmigen Ausschnittes 8 umfasst eine kreisförmige Grundfläche **13**, die senkrecht zu einer Kegelachse **14** angeordnet ist, und eine an die Grundfläche 13 angrenzende Mantelfläche **15**, die unter einem Winkel α zur Grundfläche 13 angeordnet ist. Die Grundfläche 13 des Kreiskegels 8 ist auf der Deckfläche 10 des Kreiszylinders 7 angeordnet und die Kegelachse 14 verläuft kollinear zur Zylinderachse 12, so dass eine Kegelspitze **16** auf der Zylinderachse 12 liegt.

Die Strahlformungsoptik 2 weist ein als Kollimationsoptik ausgebildetes weiteres optisches Element **17** auf, das in der Ausführung der Fig. 1 in die Grundfläche 9 des Kreiszylinders 7 integriert ist. Dabei bedeutet Integration, dass die Kollimationsoptik 17 unmittelbar an die Grundfläche 9 des Kreiszylinders 7 angrenzt und zwischen der Grundfläche 9 und der Kollimationsoptik 17 keine Grenzfläche besteht. Als Grenzfläche ist eine Fläche definiert, die zwischen zwei Medien mit unterschiedlichen Brechungsindices angeordnet ist.

Die Kollimationsoptik 17 ist als asphärisch gekrümmte Linse ausgebildet. Die Strahlformungsoptik 2 mit der integrierten Kollimationsoptik 17 ist monolithisch aus einem Material hergestellt. Als Materialien für die Strahlformungsoptik eignen sich beispielsweise Glas und Kunststoffe. Die asphärische Krümmung wird bei Glas beispielsweise durch Diamantdrehen, Replika, Schleifen und Polieren oder durch Pressen bei hohen Temperaturen aus einem Glaspressling und bei Kunststoff durch Spritzgiessen oder Spritzprägen erzeugt. Die der Grundfläche 9 des Kreiszylinders 7 abgewandte Oberfläche der Kollimationsoptik 17 bildet eine gekrümmte Eintrittsfläche **18** für den Laserstrahl 6. Dabei wird die Größe der Kollimation über den Krümmungsradius der Eintrittsfläche 18 eingestellt.

Die Mantelfläche 15 des Ausschnittes 8 bildet eine Grenzfläche zwischen der Strahlformungsoptik 2 und der Umgebung und wird im Folgenden als Reflektionsfläche bezeichnet. Der Reflektionsgrad einer Reflektionsfläche hängt unter anderem vom Einfallswinkel eines einfallenden Laserstrahls und den Brechungsindices der Materialien ab. Damit der einfallende sekundäre Laserstrahl möglichst vollständig an der Mantelfläche 15 reflektiert wird, sollte der Einfallswinkel θ die Bedingung der Totalreflektion θ ≥ arcsin (n₂/n₁)erfüllen. Der reflektierte Anteil kann alternativ oder zusätzlich dadurch erhöht werden, dass die Reflektionsfläche mit einer hochreflektierenden Beschichtung versehen wird. Je höher der reflektierte Anteil des Laserstrahls ist, umso größer ist die Intensität und umso besser ist die Sichtbarkeit des Laserstrahls auf einem Zielobjekt.

Der divergente primäre Laserstrahl 6 trifft auf die gekrümmte Eintrittsfläche 18, die einen parallelen sekundären Laserstrahl **19** erzeugt. Der sekundäre Laserstrahl 19 propagiert durch die Strahlformungsoptik 2 und trifft auf die Reflektionsfläche 15 des kegelförmigen Ausschnittes 8. Die Reflektionsfläche 15 der Strahlformungsoptik 2 formt den sekundären Laserstrahl 19 in einen linienförmigen tertiären Laserstrahl **20** um. Der tertiäre Laserstrahl 20 trifft auf die Mantelfläche 11 des Kreiszylinders 7, die im Folgenden auch als Austrittsfläche bezeichnet wird. Der überwiegende Teil des tertiären Laserstrahls 20 transmittiert durch die Austrittsfläche 11 und trifft als umgeformter Laserstrahl **21** auf ein Auskoppelfenster **22**, das im Gehäuse 3 angeordnet ist. Der über das Auskoppelfenster 22 aus dem Gehäuse 3 ausgekoppelte Laserstrahl **23** trifft auf eine Wand, Decke oder ein sonstiges Zielobjekt und kann als Referenzmarkierung verwendet werden.

Um einen über 360° geschlossenen Linienstrahl aus dem Gehäuse 3 auskoppeln zu können, muss das Auskoppelfenster 22 vollumfänglich im Gehäuse 3 ausgebildet sein, wie es beispielsweise bei Rotationslasersystemen üblich ist. Bei Lasersystemen, die als Punkt- und/oder Linienlaser ausgebildet sind, sind die Auskoppelfenster in der Regel nicht vollumfänglich ausgebildet. Der Öffnungswinkel des ausgekoppelten Laserstrahls ist durch die Größe des Auskoppelfensters beschränkt.

Da die Sichtbarkeit eines Laserstrahls auf einem Zielobjekt unter anderem von der Intensität des Laserstrahls abhängt, ist es sinnvoll, den Öffnungswinkel des Linienstrahls im Gehäuse an das Auskoppelfenster anzupassen, um die verfügbare Intensität auszunutzen und nicht einen Teil des Laserstrahls ausblenden zu müssen. Der Öffnungswinkel des ausgekoppelten Linienstrahls kann über den Bereich, den der sekundäre Laserstrahl auf der Reflektionsfläche ausleuchtet, eingestellt werden. Leuchtet der sekundäre Laserstrahl beispielsweise nur eine Hälfte der kegelförmigen Reflektionsfläche aus, ist der Öffnungswinkel auf 180° begrenzt.

Durch Verschiebung der optischen Achse des primären Laserstrahls 6 und/oder der Zylinderachse 12 des Kreiszylinders 7 ist der Öffnungswinkel des Linienstrahls einstellbar. Dazu ist eine Verstelleinrichtung **24** vorgesehen, mit der die Position der Strahlquelle 5 in einer Ausbreitungsrichtung **25** des primären Laserstrahls 6 und/oder in einer Ebene **26** senkrecht zur Ausbreitungsrichtung 25 des primären Laserstrahls 6 verstellbar ist. Alternativ oder zusätzlich ist eine weitere Verstelleinrichtung **27** vorgesehen, mit der die Strahlformungsoptik 2 in der Ausbreitungsrichtung 25 des primären Laserstrahls 6 und/oder in der Ebene 26 senkrecht zur Ausbreitungsrichtung 25 verstellbar ist.

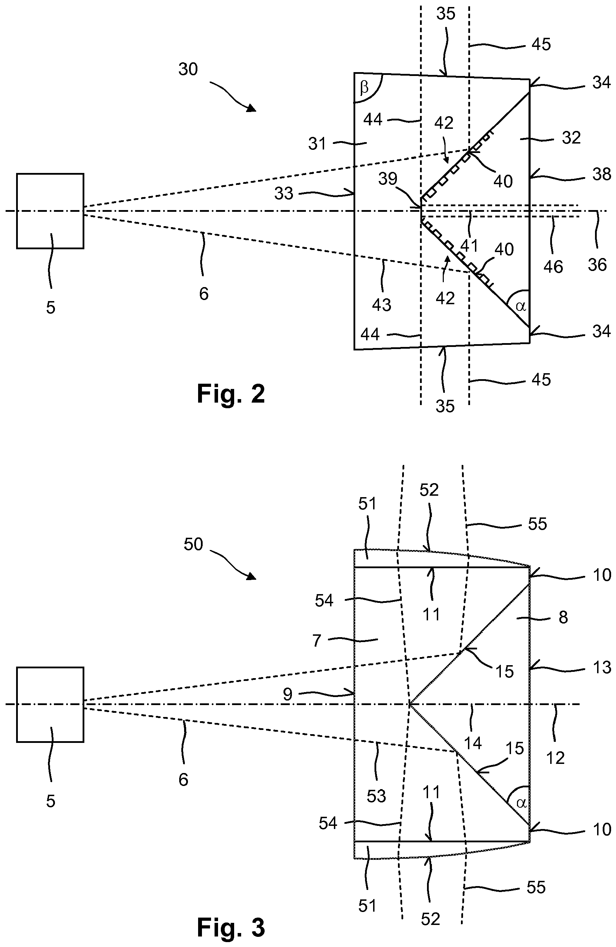

**Fig. 2** zeigt eine Ausführungsform eines als Strahlformungsoptik ausgebildeten erfindungsgemäßen optischen Systems **30**. Die Strahlformungsoptik 30 besteht aus einem Grundkörper, der als gerader Kegelstumpf **31** ausgebildet ist und einen kegelstumpfförmigen Ausschnitt **32** aufweist.

Ein Kegelstumpf entsteht dadurch, dass von einem geraden Kegel ein kleinerer Kegel parallel zur Grundfläche abgeschnitten wird. Die größere der beiden parallelen Flächen wird als Grundfläche und die kleinere als Deckfläche bezeichnet. Der Abstand der Grund- und Deckflächen definiert die Höhe des Kegelstumpfes. Die dritte der begrenzenden Flächen des Kegelstumpfes, die die Grund- und Deckfläche verbindet, wird als Mantelfläche bezeichnet.

Die Oberfläche des Kegelstumpfes 31 weist eine kreisförmige Grundfläche **33**, eine zur Grundfläche 33 parallele kreisförmige Deckfläche **34** und eine die Grund- und Deckflächen 33, 34 verbindende Mantelfläche **35**, die unter einem Winkel β zur Grundfläche 33 angeordnet ist, auf. Die Grund- und Deckflächen 33, 34 sind senkrecht zu einer Kegelachse **36** angeordnet.

Der Ausschnitt 32, der ebenfalls als Kegelstumpf ausgebildet ist, umfasst eine kreisförmige Grundfläche **38**, eine zur Grundfläche 38 parallele, kreisförmige Deckfläche **39** und eine Mantelfläche **40**, die unter dem Winkel α zur Grundfläche 38 angeordnet ist. Die Grund- und Deckflächen 38, 39 sind senkrecht zu einer Kegelachse **41** angeordnet. Die Grundfläche 38 des Ausschnittes 32 ist auf der Deckfläche 34 des Kegelstumpfes 31 angeordnet und die Kegelachse 41 des Ausschnittes 32 verläuft kollinear zur Kegelachse 36 des kegelstumpfförmigen Grundkörpers 31.

Erfindungsgemäß weist die Strahlformungsoptik 30 ein als Kollimationsoptik ausgebildetes zweites optisches Element **42** auf, das in die Mantelfläche 35 des Ausschnittes 32 integriert ist. Die Kollimationsoptik 42 ist als mikrostrukturierte Oberflächenstruktur ausgebildet. Mikrostrukturierte Oberflächenstrukturen sind auch unter der Bezeichnung "diffraktive optische Elemente", abgekürzt DOE, bekannt. Sie wirken prinzipiell wie ein optisches Gitter und spalten einen einfallenden Laserstrahl winkelabhängig in verschiedene Beugungsordnungen. Diffraktive optische Elemente haben den Vorteil, dass sich Laserstrahlen in nahezu jede beliebige Strahlverteilung formen lassen. Sie werden in photolithographischen Herstellungsverfahren sowie mittels scannender Strukturierungsverfahren wie Diamantdrehen, Laser- oder Elektronenstrahlschreiben hergestellt.

Die Grundfläche 33 des kegelstumpfförmigen Grundkörpers 31 stellt eine Grenzfläche zwischen der Strahlformungsoptik 30 und der Umgebung dar und bildet eine als Eintrittsfläche ausgebildete plane Transmissionsfläche für den Laserstrahl. Der von der Strahlquelle 5 kommende, divergente primäre Laserstrahl 6 trifft auf die plane Eintrittsfläche 33, an der der überwiegende Teil als divergenter sekundärer Laserstrahl **43** in die Strahlformungsoptik 30 transmittiert wird. Der sekundäre Laserstrahl 43 trifft auf die Deckfläche 39 und die Mantelfläche 40 des Ausschnittes 32.

Die Mantelfläche 40 des Ausschnittes 32 stellt eine weitere Grenzfläche zwischen der Strahlformungsoptik 30 und der Umgebung dar, die als Reflektionsfläche ausgebildet ist. Da die Sichtbarkeit eines Laserstrahls auf einem Zielobjekt unter anderem von der Intensität des reflektierten Laserstrahls abhängt, sollte der reflektierte Anteil möglichst groß sein. Der reflektierte Anteil wird dadurch erhöht, dass für den einfallenden Laserstrahl die Bedingung der Totalreflektion erfüllt ist und/oder die Mantelfläche 40 mit einer hochreflektierenden Beschichtung versehen wird. Der auf die Reflektionsfläche 40 auftreffende Teil des sekundären Laserstrahls wird in einen parallelen, als Linienstrahl ausgebildeten tertiären Laserstrahl **44** umgeformt. Der tertiäre Laserstrahl 44 trifft auf die Mantelfläche 35 des Kegelstumpfes 31, die eine weitere Grenzfläche zwischen der Strahlformungsoptik 30 und der Umgebung darstellt und für den Laserstrahl eine als plane Austrittsfläche ausgebildete Transmissionsfläche bildet. Der überwiegende Teil des tertiären Laserstrahls 44 tritt als umgeformter Laserstrahl **45** durch die plane Austrittsfläche 35 hindurch.

Die Deckfläche 39 des Ausschnittes 32 stellt eine weitere Grenzfläche zwischen der Strahlformungsoptik 30 und der Umgebung dar, die als Transmissionsfläche ausgebildet ist. Der Teil des sekundären Laserstrahls 43, der auf die Deckfläche 39 trifft, transmittiert durch die Deckfläche 39 und erzeugt einen punktförmigen Lotstrahl **46**. In die Transmissionsfläche 39 kann eine Strahlformungsoptik integriert sein, die den Lotstrahl formt.

**Fig. 3** zeigt ein weiteres als Strahlformungsoptik ausgebildetes optisches System **50**. Die Strahlformungsoptik 50 ist analog zur Strahlformungsoptik 2 der Fig. 1 als Grundkörper in Form eines geraden Kreiszylinders 7 mit einem kreiskegelförmigen Ausschnitt 8 ausgebildet. Sie unterscheidet sich von der Strahlformungsoptik 2 dadurch, dass ein weiteres optisches Element **51** vorgesehen ist, dass als Fokussieroptik ausgebildet ist und unmittelbar an die Mantelfläche 10 des Kreiszylinders 7 angrenzt. Die Fokussieroptik 51 und der Kreiszylinder 7 weisen eine gemeinsame Grenzfläche auf, d.h. zwischen der Mantelfläche 10 des Kreiszylinders 7 und der Fokussieroptik 51 ist weder ein weiteres optisches Element noch ein sonstiges Medium, wie beispielsweise Luft, angeordnet.

Die Grundfläche 9 des Kreiszylinders 7 bildet für den Laserstrahl eine als plane Eintrittsfläche ausgebildete Transmissionsfläche und die Mantelfläche 15 des kegelförmigen Ausschnittes 8 eine plane Reflektionsfläche. Die Fokussieroptik 51 grenzt als Optik mit einer asphärischen Krümmung oder einer mikrostrukturierten Oberflächenstruktur unmittelbar an die Mantelfläche 11 des Kreiszylinders 7 an und bildet an der der Mantelfläche 11 des Kreiszylinders 7 abgewandten Oberfläche eine als Austrittsfläche ausgebildete Transmissionsfläche **52** für den Laserstrahl.

Der divergente primäre Laserstrahl 6 trifft auf die plane Eintrittsfläche 9 der Strahlformungsoptik 50, an der der überwiegende Teil als divergenter sekundärer Laserstrahl **53** in die Strahlformungsoptik 50 transmittiert wird. Der sekundäre Laserstrahl 53 trifft auf die Reflektionsfläche 15, an der der sekundäre Laserstrahl 53 in einen als Linienstrahl ausgebildeten tertiären Laserstrahl **54** umgeformt wird, wobei die Ausbreitungsrichtung des tertiären Laserstrahls 54 senkrecht zur Ausbreitungsrichtung des sekundären Laserstrahls 53 verläuft. Anschließend trifft der tertiäre Laserstrahl 54 auf die Austrittsfläche 52, durch die der überwiegende Teil des tertiären Laserstrahls 54 als umgeformter Laserstrahl **55** transmittiert.

Die Beispiele der Fign. 1 bis 3 zeigen Strahlformungsoptiken 2, 30, 50 mit einem integrierten oder unmittelbar angrenzenden zweiten optischen Element 17, 42, 51, die auf der Eintrittsfläche, der Reflektionsfläche oder der Austrittsfläche angeordnet sind. Das zweite optische Element kann auch auf zwei der drei Flächen, beispielsweise auf der Eintrittsfläche und der Reflektionsfläche oder auf der Eintrittsfläche und der Austrittsfläche oder auf der Reflektionsfläche und der Austrittsfläche, oder auf allen drei Flächen, Eintrittsfläche, Reflektionsfläche und Austrittsfläche, angeordnet sein.

Als Grundfläche des Grundkörpers eignen sich alle begrenzten Flächen, bei denen die Richtungsableitung der Begrenzungslinie stetig ist. Ist die Richtungsableitung an einer Stelle nicht stetig, werden die Richtungen der Normalen zu Tangenten (linksseitige und rechtsseitige) nicht gleich. Dies führt zu einer Unterbrechung des 360°-Linienstrahls, so dass der Linienstrahl nicht vollumfänglich geschlossen ist.

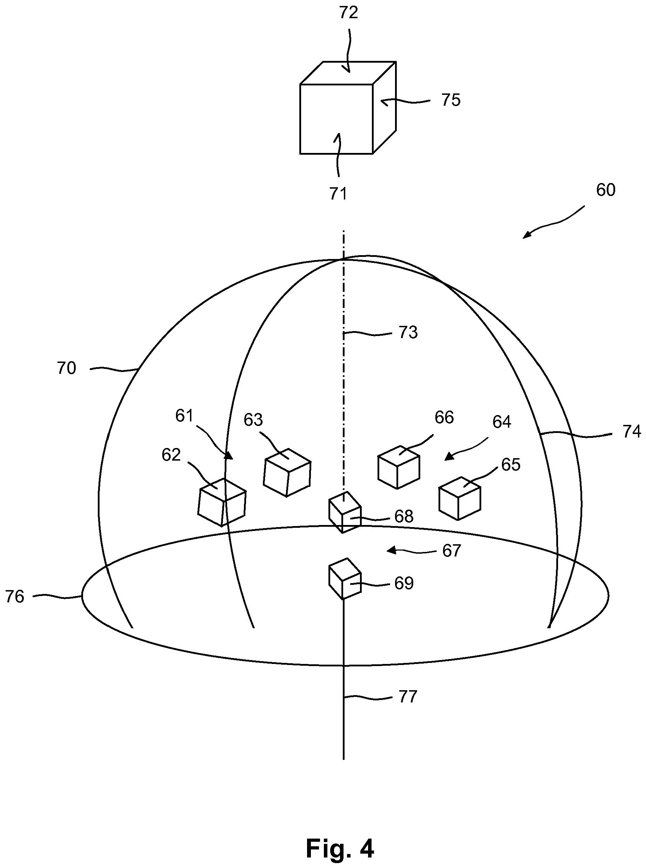

**Fig. 4** zeigt ein erfindungsgemäßes Lasersystem **60**, das drei linienförmige Laserstrahlen, die als Linienstrahlen bezeichnet werden, und einen punktförmigen Laserstrahl, der als Punktstrahl bezeichnet wird, erzeugt. Das Lasersystem 60 weist eine erste Strahleinrichtung **61** mit einer ersten Strahlquelle **62** und einem ersten erfindungsgemässen optischen System **63**, eine zweite Strahleinrichtung **64** mit einer zweiten Strahlquelle **65** und einem zweiten erfindungsgemässen optischen System **66** und eine dritte Strahleinrichtung **67** mit einer dritten Strahlquelle **68** und einem dritten erfindungsgemässen optischen System **69** auf.

Die erste Strahleinrichtung 61 erzeugt einen ersten Linienstrahl **70**, der in einer ersten vertikalen Ebene **71** angeordnet ist und als erster vertikaler Linienstrahl bezeichnet wird. Die erste vertikale Ebene 71 ist senkrecht zu einer horizontalen Ebene **72** angeordnet. Die Ausrichtung der horizontalen Ebene 72 ist über eine durch die Gravitationskraft bestimmte vertikale Richtung **73** definiert.

Die zweite Strahleinrichtung 64 erzeugt einen zweiten Linienstrahl **74**, der in einer zweiten vertikalen Ebene **75** angeordnet ist und als zweiter vertikaler Linienstrahl bezeichnet wird. Die zweite vertikale Ebene 75 ist senkrecht zur horizontalen Ebene 72 und senkrecht zur ersten vertikalen Ebene 71 ausgebildet.

Die dritte Strahleinrichtung 67 erzeugt einen dritten Linienstrahl **76**, der in der horizontalen Ebene 72 angeordnet ist und als horizontaler Linienstrahl bezeichnet wird. Der horizontale Linienstrahl 76 ist senkrecht zum ersten und zweiten vertikalen Linienstrahl 70, 74 angeordnet. Die dritte Strahleinrichtung 67 erzeugt neben dem horizontalen Linienstrahl 76 einen Punktstrahl **77**, der entgegengesetzt zur vertikalen Richtung 73 ausgerichtet ist und auf der Schnittlinie der beiden vertikalen Linienstrahlen 70, 74 liegt. Der Punktstrahl 77 kann alternativ auch von einer zusätzlichen Strahlquelle erzeugt werden.

Alternativ zum Lasersystem 60, das drei Strahlquellen 62, 65, 68 umfasst, kann das Lasersystem auch eine einzige Strahlquelle aufweisen. In diesem Fall wird der Laserstrahl über Strahlteiler in mehrere Teilstrahlen geteilt. Die Ausführung eines Lasersystems mit einer einzigen Strahlquelle ist dann vorteilhaft, wenn die Strahlquelle eine ausreichende Leistung zur Verfügung stellen kann, dass die Linienstrahlen auf dem Untergrund sichtbar sind. Ein Lasersystem mit einer einzigen Strahlquelle kann kompakter aufgebaut werden als ein Lasersystem, in dem drei Strahlquellen angeordnet sind.

## Patentansprüche

1. Optisches System (30) zur Strahlformung eines Laserstrahls (6) in einen linienförmigen Laserstrahl (44) mit
einem ersten optischen Element, das zumindest abschnittsweise als Grundkörper (31) mit einer Grundfläche (33) und einer an die Grundfläche (33) angrenzenden Mantelfläche (35) ausgebildet ist, wobei die Grundfläche (33) und die Mantelfläche (35) des Grundkörpers (31) zumindest abschnittsweise als Transmissionsflächen für den Laserstrahl (6; 44) ausgebildet sind und der Grundkörper (31) einen kegelförmigen oder kegelstumpfförmigen Ausschnitt (32) mit einer Mantelfläche (40), die zumindest abschnittsweise als Reflektionsfläche für den Laserstrahl (6) ausgebildet ist und den Laserstrahl (6) in den linienförmigen Laserstrahl (44) umformt, aufweist, und
einem zweiten optischen Element (42),
**dadurch gekennzeichnet, dass**
das zweite optische Element (42) in die Mantelfläche (40) des Ausschnittes (32) und/oder die Mantelfläche (35) des Grundkörpers (31) integriert ist und als fokussierendes oder kollimierendes optisches Element ausgebildet ist.

2. Optisches System nach Anspruch 1, **dadurch gekennzeichnet, dass** das zweite optische Element als Kollimationsoptik (42) ausgebildet ist.

3. Optisches System nach Anspruch 2, **dadurch gekennzeichnet, dass** das zweite optische Element als mikrostrukturierte Oberflächenstruktur (42) ausgebildet ist.

4. Optisches System nach einem der Ansprüche 1 bis 3, **dadurch gekennzeichnet, dass** der Ausschnitt (32) eine an die Mantelfläche (40) angrenzende Deckfläche (39), die zumindest abschnittsweise als Transmissionsfläche für den Laserstrahl (6) ausgebildet ist, aufweist.

5. Optisches System nach Anspruch 4, **dadurch gekennzeichnet, dass** ein optisches Element, das in die Deckfläche (39) integriert ist oder unmittelbar an die Deckfläche (39) des Ausschnittes (32) angrenzt, vorgesehen ist.

## Claims

1. Optical system (30) for shaping a laser beam (6) into a linear laser beam (44), comprising
a first optical element designed at least in some areas as a base body (31) with a base surface (33) and a lateral surface (35) adjoining the base surface (33), wherein the base surface (33) and the lateral surface (35) of the base body (31) are designed at least in some areas as transmitting surfaces for the laser beam (6; 44) and the base body (31) has a conical or frustoconical cutout (32) with a lateral surface (40) designed at least in some areas as a reflecting surface for the laser beam (6) and reshaping the laser beam (6) into the linear laser beam (44), and
a second optical element (42),
**characterised in that**
the second optical element (42) is integrated into the lateral surface (40) of the cutout (32) and/or the lateral surface (35) of the base body (31) and is designed as a focusing or collimating optical element.

2. Optical system according to claim 1, **characterised in that** the second optical element is designed as a collimating lens system (42).

3. Optical system according to claim 2, **characterised in that** the second optical element is designed as a micro structured surface structure (42).

4. Optical system according to one of claims 1 to 3, **characterised in that** the cutout (32) has a top surface (39) adjoining the lateral surface (40) and designed at least in some areas as a transmitting surface for the laser beam (6).

5. Optical system according to claim 4, **characterised by** an optical element integrated into the top surface (39) or directly adjoining the top surface (39) of the cutout (32).

## Revendications

1. Système optique (30) de formation d'un faisceau laser (6) pour obtenir un faisceau laser linéaire (44), comportant :
un premier élément optique qui est au moins partiellement conçu comme un corps principal (31) ayant une surface de base (33) et une surface extérieure (35) adjacente à la surface de base (33), dans lequel la surface de base (33) et la surface extérieure (35) du corps principal (31) sont au moins partiellement conçues comme des surfaces de transmission pour le faisceau laser (6 ; 44), et le corps principal (31) comporte une partie sphérique ou tronconique (32) avec une surface extérieure (40) qui est au moins partiellement conçue comme une surface de réflexion pour le faisceau laser (6), et qui déforme le faisceau laser (6) pour obtenir le faisceau laser linéaire (44), et
un second élément optique (42),
**caractérisé en ce que**
le second élément optique (42) est intégré dans la surface extérieure (40) de la partie (32) et/ou la surface extérieure (35) du corps principal (31) est conçue comme un élément de focalisation ou de collimation.

2. Système optique selon la revendication 1, **caractérisé en ce que** le second élément optique est conçu comme un composant optique de collimation (42).

3. Système optique selon la revendication 2, **caractérisé en ce que** le second élément optique est conçu comme une structure de surface microstructurée (42).

4. Système optique selon l'une des revendications 1 à 3, **caractérisé en ce que** la partie (32) comporte une surface supérieure (39) adjacente à la surface extérieure (40), laquelle surface supérieure est au moins partiellement conçue comme une surface de transmission pour le faisceau laser (6).

5. Système optique selon la revendication 4, **caractérisé en ce qu'**est prévu un élément optique qui est intégré dans la surface supérieure (39) ou qui est directement adjacent à la surface supérieure (39) de la partie (32).
